# EUROPEAN PATENT APPLICATION

(11) **EP 2 538 415 A2**
(43) Date of publication of application: **26.12.2012**
(21) Application number: 12004005.0
(22) Date of filing: 23.05.2012
(51) Int. Cl.: G21C 9/016, G21C 11/08, G21C 15/18

(54) **Nuclear power plant**

(30) Priority: 22.06.2011 JP 2011138531
(71) Applicant: Kabushiki Kaisha Toshiba, Minato-ku, Tokyo 105-8001 (JP)
(72) Inventor: Kurita, Tomohisa, Tokyo (JP); Tahara, Mika, Tokyo (JP); Komuro, Mitsuo, Tokyo (JP); Tobimatsu, Toshimi, Tokyo (JP); Suzuki, Ryo, Tokyo (JP); Hamazaki, Ryoichi, Tokyo (JP); Katagiri, Noriyuki, Tokyo (JP); Tanabe, Masashi, Tokyo (JP)
(74) Representative: Münch, Martin Walter

(57) **Abstract**

An embodiment of a nuclear power plant has: a reactor vessel (11) containing a core (10); a reactor containment vessel (12) containing the reactor vessel (12); and a radiation heat reflecting member (30) disposed at a portion below the reactor vessel (11) inside the reactor containment vessel (12). The radiation heat reflecting member (30) may block radiation heat, which is emitted toward a side wall surface (23) of the reactor containment vessel (12) from the core (31) that has been put in a molten state by an accident and flowed downward from the reactor vessel (11) to be accumulated at a lower portion (19) of the reactor containment vessel (12). The radiation heat reflecting member (47) may block radiation heat, which is emitted toward a supporting structure (42) supporting devices (44) disposed inside the reactor containment vessel (12).

## Description

### FIELD

Embodiments described herein relate to a nuclear power plant with increased safety against a core meltdown accident.

### BACKGROUND

In a water-cooled nuclear reactor, a loss of cooling water caused due to stoppage of water supply to a reactor pressure vessel or rupture of a pipe connected to the reactor pressure vessel lowers water level in the reactor to expose the core, which may result in insufficient cooling. In case such a scenario occurs, the reactor is designed to be automatically emergency-shut down by a signal indicating lowering of the water level, followed by injection of coolant by an emergency core cooling system (ECCS) to submerge the core for cooling so as to prevent the core meltdown accident.

However, although the probability is very low, there may be assumed a case where the ECCS fails to operate and where other devices, such as a water injection device for water injection into the core, fail to function. In such a case, the core is exposed due to lowering of the water level in the core to cause insufficient cooling. As a result, fuel rod temperature rises due to decay heat that continues to be generated even after the shutdown of the reactor, which may finally result in the core meltdown.

If such an accident occurs, a high-temperature molten core falls to a lower portion of the reactor pressure vessel and thereafter penetrates the lower end plate of the reactor pressure vessel while melting it to fall to the floor of the containment vessel. The molten core heats up concrete stretching over the floor, and then reacts with the concrete, when the contact surface therewith becomes high temperature to generate a large amount of non-condensable gas such as carbon dioxide or hydrogen and to melt and erode the concrete. The generated non-condensable gas can increase pressure in the containment vessel to damage the containment vessel. Further, the melting and erosion of the concrete may damage a containment vessel boundary or reduce structure strength of the containment vessel. Consequently, the reaction between the molten core and concrete may result in breakage of the containment vessel, and there can arise a risk that radioactive materials in the containment vessel are released to an external environment.

In order to suppress the reaction between the molten core and concrete, it is necessary to cool the molten core so that temperature of the surface of the concrete contacting with a bottom of the molten core is below erosion temperature (1500K or less for typical concrete) or to avoid direct contact between the molten core and the concrete. For this purpose, various countermeasures have been proposed against occasions when the molten core falls. One of the countermeasures is an apparatus referred to as a core catcher that is configured to receive the molten core by means of a heat-resistant material so as to cool the molten core in combination with a water injection means (See Japanese Patent No. 3,510,670, Japanese Patent No. 3,150,451, and Japanese Patent Application Laid-Open Publication No. 2007-225356).

In known techniques, water is injected into the molten core so as to cause water on the upper surface of the molten core to boil for cooling. In this case, if the water injection is started before accumulation of the high-temperature molten core, a steam explosion occurs. Therefore, the water injection is started after the molten core is temporarily accumulated at the lower portion of the containment vessel. Therefore, there occurs a state where the high-temperature molten core is exposed above the water level. The temperature of the high-temperature molten core at this time is about 2,300 degrees Centigrade, and radiation heat of the high-temperature molten core having such a high temperature may melt the devices or the structures within the containment vessel, the wall surface of the pressure boundary, or the like.

Further, it is expected that a loss of power occurs in such an accident causing a core meltdown. Therefore, adoption of a melting valve that does not require a signal or an active motor as a mechanism for the water injection is expected. The melting valve is configured to start water injection when valve temperature reaches an operation temperature, e.g., 260 degrees Centigrade. In consideration of a possibility of a failure of operation, a plurality of the melting valves are provided. If the operation of the melting valve delays or if a space surrounding the valve is filled with steam to prevent the valve temperature from reaching the valve operation temperature, a time period during which a high-temperature molten core is not cooled becomes prolonged, which may result in damage of the pressure boundary or the core catcher due to erosion of the high-temperature molten core.

### BRIEF DESCRIPTION OF THE DRAWINGS

The above and other features and advantages of the present invention will become apparent from the discussion hereinbelow of specific, illustrative embodiments thereof presented in conjunction with the accompanying drawings, in which:
FIG 1 is a schematic cross-sectional view in elevation illustrating a first embodiment of a nuclear power plant according to the present invention;
FIG. 2 is a partial cross-sectional view in elevation illustrating a lower portion of the reactor containment vessel of the nuclear power plant according to a second embodiment of the present invention;
FIG. 3 is a partial cross-sectional view in elevation illustrating the lower portion of the reactor containment vessel of the nuclear power plant according to a third embodiment of the present invention;
FIG. 4 is a partial cross-sectional view in elevation illustrating the lower portion of the reactor containment vessel of the nuclear power plant according to a fourth embodiment of the present invention;
FIG. 5 is a partial cross-sectional view in elevation illustrating the lower portion of the reactor containment vessel of the nuclear power plant according to a fifth embodiment of the present invention;
FIG. 6 is a schematic, partial cross-sectional view in elevation illustrating a portion around the melting valve of the nuclear power plant according to a sixth embodiment of the present invention;
FIG. 7 is a horizontal cross-sectional view taken along the line VII-VII in FIG. 6 and as viewed in the direction indicated by arrows therein;
FIG. 8 is a schematic, partial cross-sectional view in elevation illustrating a portion around the melting valve of the nuclear power plant according to a seventh embodiment of the present invention;
FIG. 9 is a horizontal cross-sectional view taken along the line IX-IX in FIG. 8 and as viewed in the direction indicated by arrows therein;
FIG. 10 is a partial cross-sectional view in elevation illustrating the lower portion of the reactor containment vessel of the nuclear power plant according to an eighth embodiment of the present invention; and
FIG. 11 is a partial cross-sectional view in elevation illustrating the lower portion of the nuclear containment vessel of the nuclear power plant according to a ninth embodiment of the present invention.

### DETAILED DESCRIPTION

The embodiment of the present invention has been made to solve the above problems, and an object thereof is to increase safety of the nuclear power plant against a core meltdown which is assumed as an accident occurring in the nuclear power plant.

According to an aspect of the present invention, there is provided a nuclear power plant comprising: a nuclear power plant comprising: a reactor vessel containing a core; a reactor containment vessel containing the reactor vessel; and a radiation heat reflecting member disposed at a portion below the reactor vessel inside the reactor containment vessel.

The following describes embodiments of nuclear power plants according to the present invention with reference to the accompanying drawings. Throughout the description, the same reference numerals are given to the same or similar parts, and the repeated description will be omitted.

### [FIRST EMBODIMENT]

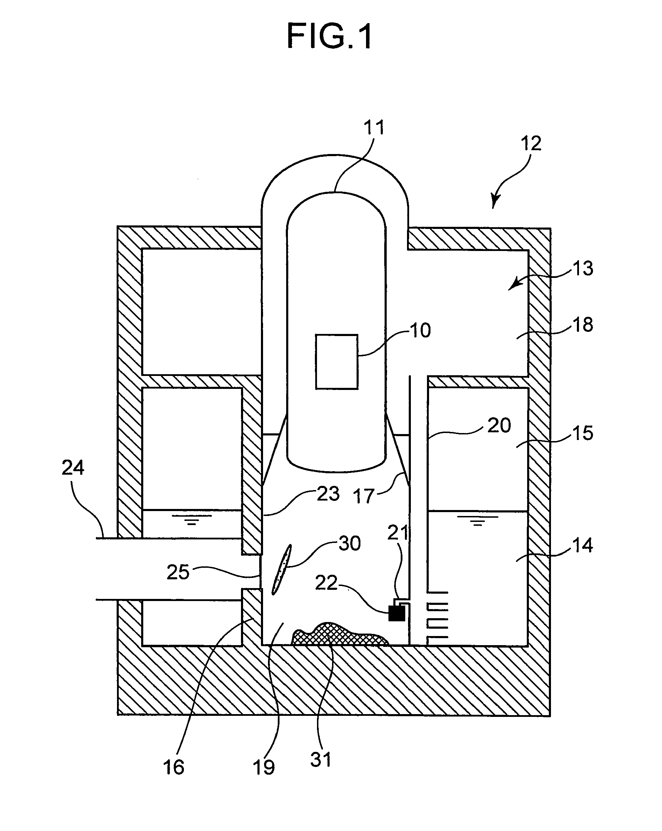

FIG. 1 is a schematic cross-sectional view in elevation illustrating a first embodiment of a nuclear power plant according to the present invention. A reactor pressure vessel (reactor vessel) 11 containing a core 10 is contained in a reactor containment vessel 12. The reactor containment vessel 12 is partitioned into a dry well 13 containing the reactor pressure vessel 11 and a wet well 15 containing a suppression pool 14. The reactor pressure vessel 11 is supported by supporting legs 17 which are supported by a cylindrical pedestal 16. A part of space within the dry well 13 above the supporting legs 17 is referred to as an upper dry well 18, and a part of space inside the pedestal 16 below the supporting leg 17 is referred to as a lower dry well 19. The wet well 15 is formed into an annular shape to surround the lower dry well 19.

Cooling water is normally stored in the suppression pool 14. Vent pipes 20 vertically extend toward the cooling water in the suppression pool 14 from the upper dry well 18. An injector pipe 21 extends from the vent pipe 20 to communicate with the lower dry well 19. A melting valve 22 is mounted to the injector pipe 21.

A liner 23 is provided on an inner surface of the reactor containment vessel 12.

An access tunnel 24 is provided so as to penetrate the side wall of the reactor containment vessel 12 and pass through the wet well 15 in a horizontal direction to communicate with the lower dry well 19 from outside of the containment vessel 12. An access tunnel hatch 25 is mounted to a portion at which the access tunnel 24 is opened to the lower dry well 19. The access tunnel hatch 25 is closed during normal operation time of the nuclear power plant. The access tunnel hatch 25 is opened at periodic inspection of the nuclear power plant so as to allow the operators to come in and out of the lower dry well 19.

In the present embodiment, a radiation heat reflecting mechanism (radiation heat reflecting member) 30 is installed inside the lower dry well 19 so as to cover the access tunnel hatch 25 and the space therearound. The radiation heat reflecting mechanism 30 is made of a heat-resistant material. It is assumed that the core 10 melts down due to an accident of the nuclear power plant, and further assumed that a molten core 31 penetrates the bottom of the reactor pressure vessel 11 to be accumulated on the bottom portion of the lower dry well 19. In case such a scenario occurs, the radiation heat reflecting mechanism 30 is provided so as to prevent or suppress the radiation heat emitted from the high-temperature molten core 31 from reaching the access tunnel hatch 25 and the space therearound, as well as the liner 23 provided on the side surface of the lower dry well 19.

According to the present embodiment, in a case where the high-pressure cooling water in the reactor pressure vessel 11 flows out into the dry well 13 upon occurrence of an accident of the nuclear power plant, steam is guided to the suppression pool 14 through the vent pipes 20, where the steam is condensed, whereby pressure rise in the reactor containment vessel 12 is suppressed.

Further, according to the present embodiment, even if the core 10 melts down due to an accident of the nuclear power plant and the molten core 31 penetrates the bottom of the reactor pressure vessel 11 to be accumulated on the bottom of the lower dry well 19, the radiation heat emitted from the accumulated molten core 31 toward the side wall of the reactor containment vessel 12, as well as the access tunnel hatch 25 and the space therearound is blocked to prevent or suppress thermal erosion of the side wall of the reactor containment vessel 12 et al.

As a result, temperature rise of the side wall of the reactor containment vessel 12 can be prevented to thereby prevent a radioactive material from leaking due to breakage in the wall surface of the reactor containment vessel 12 serving as a pressure boundary or the access tunnel 24.

Further, upon occurrence of an accident of the nuclear power plant, the melting valve 22 melts down by the high-temperature molten core 31 accumulated on the bottom of the lower dry well 19 to cause the cooling water in the suppression pool 14 to be supplied to the lower dry well 19 through the injector valve 21, thereby cooling the molten core 31.

### [SECOND EMBODIMENT]

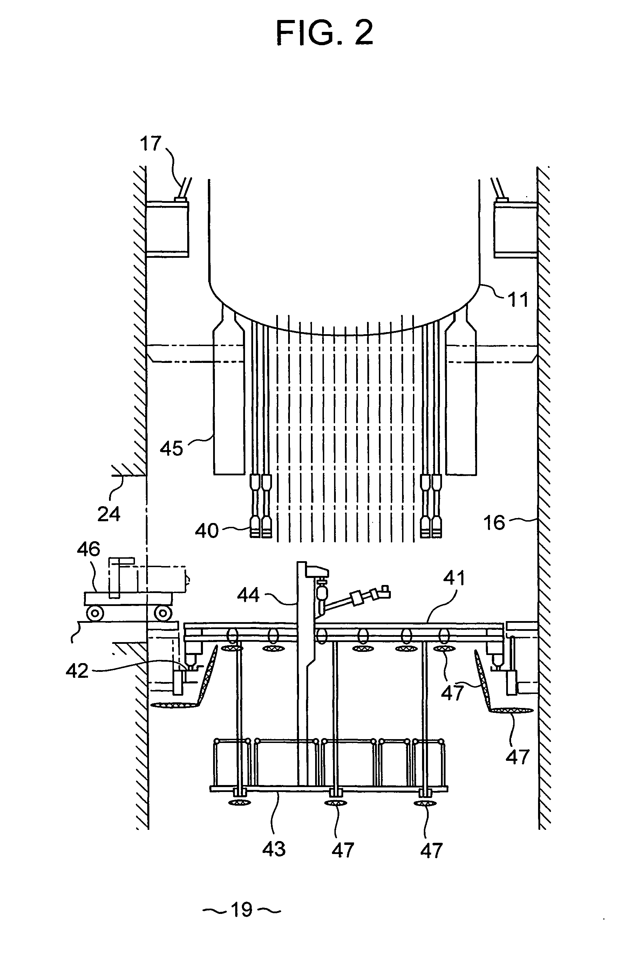

FIG. 2 is a partial cross-sectional view in elevation illustrating a lower portion of the reactor containment vessel of the nuclear power plant according to a second embodiment of the present invention.

As illustrated in FIG. 2, control rod drive mechanisms (CRDs) 40 and internal pumps (RIPs) 45 are mounted to the lower portion of the reactor pressure vessel 11 so as to penetrate the reactor pressure vessel 11.

An upper platform 41 is installed inside the lower dry well 19 at a portion below the control rod drive mechanisms 40. The upper platform 41 is supported by platform rails 42. A lower platform 43 is suspended downward from the upper platform 41.

A CRD exchanger 44 for exchange of the control rod drive mechanisms 40 is supported by the upper platform 41 and the lower platform 43.

In the present embodiment, radiation heat reflecting mechanisms 47 are installed so as to cover lower and side surfaces of the upper platform 41, the platform rails 42 and the lower platform 43.

As illustrated in FIG. 2, a RIP carriage 46 can be made to pass through the access tunnel 24 and travel on the upper platform 41 for installation or removal of the internal pumps 45.

According to the present embodiment, in a case where the molten core 31 (see FIG. 1) has been accumulated on the bottom of the lower dry well 19 upon occurrence of an accident of the nuclear power plant, the radiation heat from the molten core 31 is blocked by the radiation heat reflecting mechanisms 47 before reaching supporting structures (structural members) supporting devices in the reactor containment vessel 12, thereby preventing temperature rise of the supporting structures. As a result, it is possible to prevent the supporting structures from melting by heat, thereby preventing devices such as the CRD exchanger 44 supported by the supporting structures or the supporting structures themselves from falling to the lower portion.

### [THIRD EMBODIMENT]

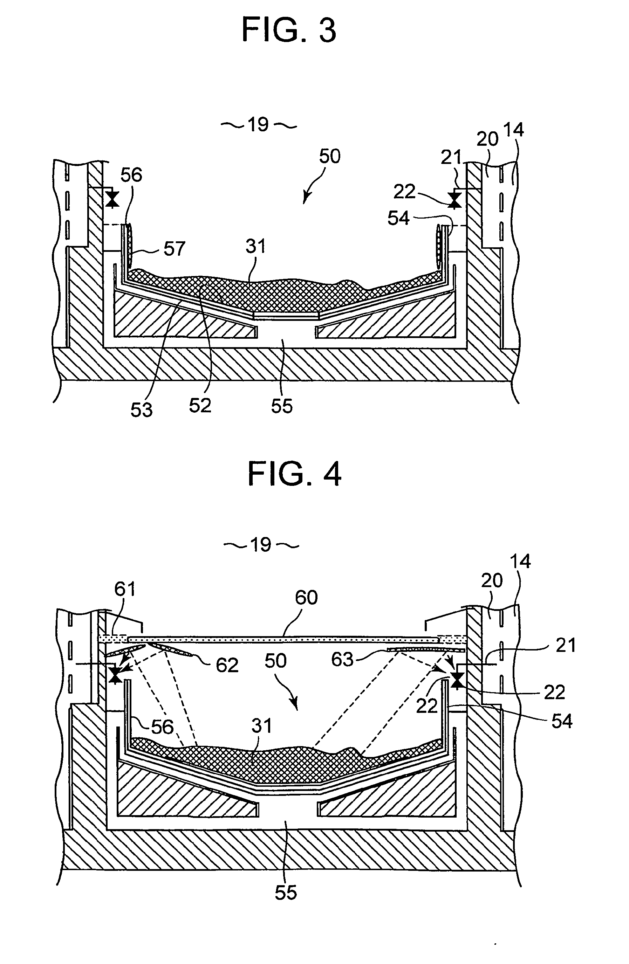

FIG. 3 is a partial cross-sectional view in elevation illustrating the lower portion of the reactor containment vessel of the nuclear power plant according to a third embodiment of the present invention.

In the present embodiment, a core catcher 50 is provided at the bottom of the lower dry well 19 (see FIG. 1) of the reactor containment vessel 12. The core catcher 50 is located just under the reactor pressure vessel 11. The core catcher 50 is a member for receiving the molten core 31 that has penetrated the bottom portion of the reactor pressure vessel 11 to fall upon occurrence of an accident of the reactor to prevent diffusion of radioactive materials.

The core catcher 50 includes a molten core receiving portion 52 opened upward for receiving the molten core falling from above and a cooling channel 55 for allowing cooling water to flow along the outside of the molten core receiving portion 52. The molten core receiving portion 52 includes; a mortar-shaped bottom plate portion 53 center portion of which is concave, and a side wall portion 54 vertically rising from the periphery of the bottom plate portion 53. A heat-resistant wall 56 is provided inside the bottom plate portion 53 and the side wall portion 54.

Radiation heat reflecting members 57 are installed inside the heat-resistant wall 56 on the inside of the side wall portion 54. Further, the melting valve 22 is disposed along the wall of the pedestal 16 at a portion above the core catcher 50.

According to the present embodiment, the installation of the radiation heat reflecting members 57 suppress the amount of the radiation heat emitted from the molten core 31 in the molten core receiving portion 52 that reaches the side wall portion 54 of the core catcher 50 to thereby suppress temperature rise of the side wall portion 54. As a result, breakage of the side wall portion 54 due to the temperature rise can be prevented or suppressed to thereby prevent a heat-resistant material constituting the heat-resistant wall 56 from falling.

### [FOURTH EMBODIMENT]

FIG. 4 is a partial cross-sectional view in elevation illustrating the lower portion of the reactor containment vessel of the nuclear power plant according to a fourth embodiment of the present invention.

The present embodiment is a modification of the third embodiment. In the present embodiment, a sump floor 60 spreads horizontally above the core catcher 50 and below the reactor pressure vessel 11. The sump floor 60 is supported along the pedestal 16 by a sump floor supporting structure 61 mounted to the pedestal 16.

Radiation heat reflecting members 62 and 63 are installed at a lower surface of the sump floor 60 so as to shield the portion surrounding the sump floor 60 and the sump floor supporting structure 61 from the radiation heat from the molten core 31. The radiation heat reflecting member 62 is adjusted in angle so as to guide the reflected radiation heat to the melting valve 22. The radiation heat reflecting member 63 is disposed in such a manner that its concave surface, which is opposed to the core catcher 50, reflects the radiation heat from the molten core 31 in the core catcher 50 and concentrates the radiation heat to the melting valve 22.

According to the present embodiment, the radiation heat from the molten core 31 in the core catcher 50 is reflected by the radiation heat reflecting member 63, thereby shielding the sump floor 60 and the sump floor supporting structure 61 from the radiation heat. In addition, the reflected radiation heat can be concentrated on the melting valve 22.

As a result, temperature rise of the sump floor supporting structure 61 due to the radiation heat from the high-temperature molten core 31 is prevented to thereby prevent the entire sump floor 60 from falling, as well as to prevent the radiation heat from breaking the liner 23 and the like constituting the boundary of the reactor containment vessel inner wall. Further, temperature rise of the melting valve 22 can be accelerated by the radiation heat from the molten core 31 to thereby reduce valve open delay time. Furthermore, an increase in the temperature of the melting valve 22 by utilizing the radiation heat allows the melting valve 22 to start operation regardless of ambient temperature distribution.

### [FIFTH EMBODIMENT]

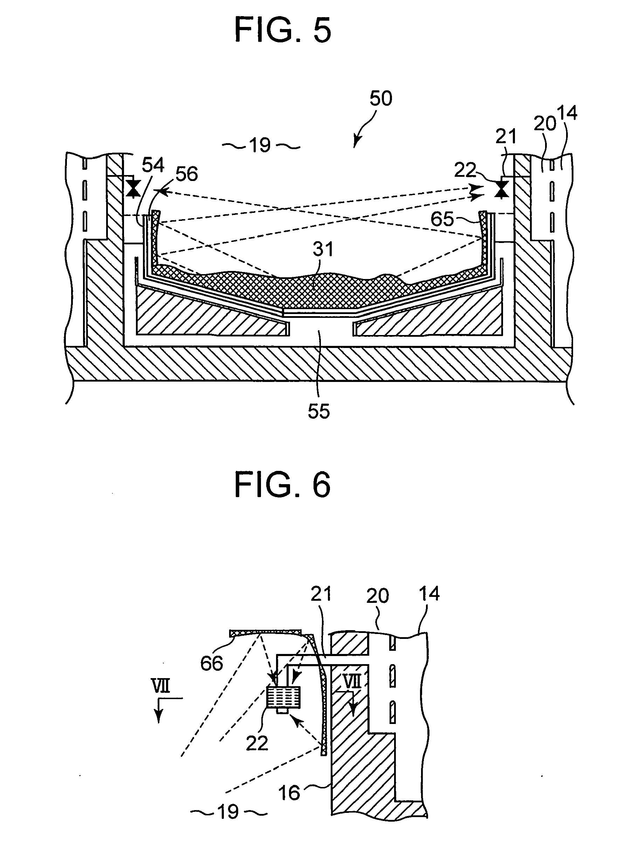

FIG. 5 is a partial cross-sectional view in elevation illustrating the lower portion of the reactor containment vessel of the nuclear power plant according to a fifth embodiment of the present invention.

The present embodiment is a modification of the third embodiment. In the present embodiment, a radiation heat reflecting member 65 is installed inside the heat-resistant wall 56 on the inside of the side wall portion 54. The radiation heat reflecting member 65 is disposed in such a manner that its concave surface, which is opposed to the core catcher 50, reflects the radiation heat from the molten core 31 in the core catcher 50 and concentrates the radiation heat to the melting valve 22.

According to the present embodiment, the radiation heat from the molten core 31 in the core catcher 50 is reflected by the radiation heat reflecting member 65, so that, as in the third embodiment, the amount of the radiation heat emitted from the molten core 31 in the molten core receiving portion 52 that reaches the side wall portion 54 of the core catcher 50 is suppressed to thereby suppress temperature rise of the side wall portion 54. As a result, breakage of the side wall portion 54 due to the temperature rise can be prevented or suppressed to thereby prevent a heat-resistant material constituting the heat-resistant wall 56 from falling.

Further, as in the fourth embodiment, the radiation heat is reflected by the radiation heat reflecting member 65 and concentrated on the melting valve 22. As a result, temperature rise of the melting valve 22 can be accelerated to thereby reduce valve open delay time. Furthermore, an increase in the temperature of the melting valve 22 by utilizing the radiation heat allows the melting valve 22 to start operation regardless of ambient temperature distribution.

### [SIXTH EMBODIMENT]

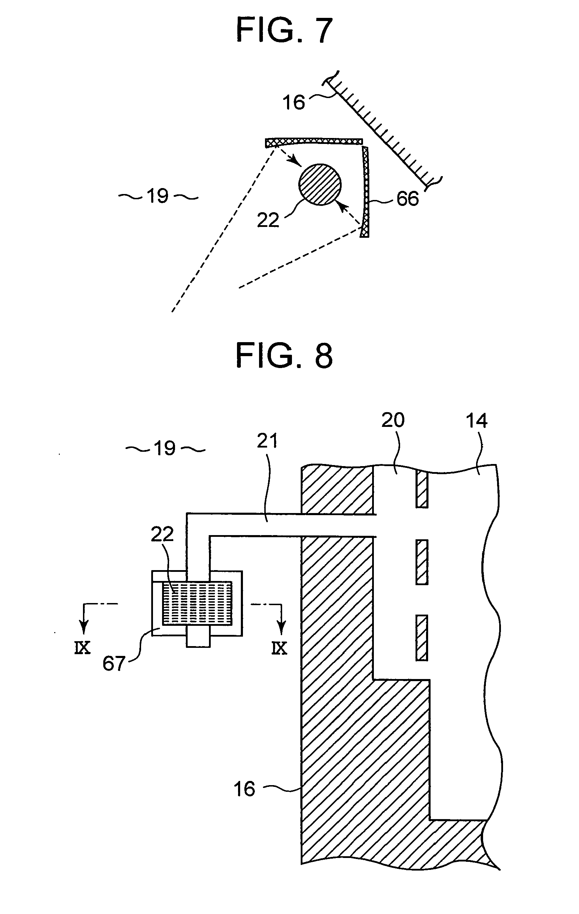

FIG. 6 is a schematic, partial cross-sectional view in elevation illustrating a portion around the melting valve of the nuclear power plant according to a sixth embodiment of the present invention. FIG. 7 is a horizontal cross-sectional view taken along the line VII-VII in FIG. 6 and as viewed in the direction indicated by arrows therein.

In the present embodiment, a radiation heat reflecting members 66 are installed above the melting valve 22 and around the periphery thereof. The radiation heat reflecting members 66 are disposed in such a manner that their concave surfaces, which are opposed to the core catcher 50, reflects the radiation heat from the molten core 31 in the core catcher 50 and concentrate the radiation heat to the melting valve 22.

According to the present embodiment, the radiation heat emitted from the molten core 31 and irradiated around the melting valve 22 is reflected by the radiation heat reflecting members 66 and concentrated on the melting valve 22.

As a result, temperature rise of the melting valve 22 can be accelerated by the radiation heat from the molten core 31 to thereby reduce valve open delay time. Further, an increase in the temperature of the melting valve 22 by utilizing the radiation heat allows the melting valve 22 to start operation regardless of ambient temperature distribution. Furthermore, it is possible to shield the inner wall of the reactor containment vessel 12 and the sump floor supporting structure 61 which are positioned outside or above the melting valve 22 from the radiation heat.

### [SEVENTH EMBODIMENT]

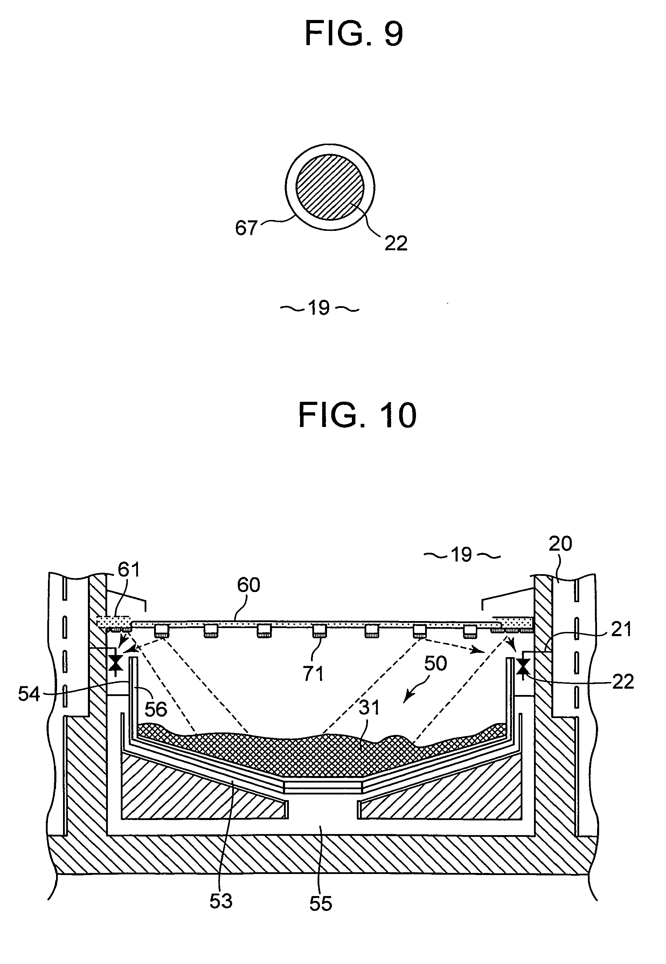

FIG. 8 is a schematic, partial cross-sectional view in elevation illustrating a portion around the melting valve of the nuclear power plant according to a seventh embodiment of the present invention. FIG. 9 is a horizontal cross-sectional view taken along the line IX-IX in FIG. 8 and as viewed in the direction indicated by arrows therein.

The present embodiment is a modification of the sixth embodiment and differs from the sixth embodiment in that a heat absorbing agent 67 has been applied on the outer surface of the melting valve 22.

The melting valve 22 has inside thereof a structure that starts performing valve operation when being melted, and transfers outside heat to the melting portion to function the structure. In the present embodiment, the application of the heat absorbing agent 67 on the outer surface of the melting valve 22 allows melting valve 22 to absorb the radiation heat from the molten core 31 and the radiation heat reflecting members 66. This application of the heat absorbing agent 67 accelerates the heat absorption of the melting valve 22 to accelerate temperature rise of the melting valve 22. As a result, valve open delay time of the melting valve 22 can be reduced. Further, the emitted radiation heat can be utilized for the operation of the melting valve 22 without reflection. Furthermore, the temperature rise of the outer surface of the melting valve 22 is suppressed by suppressing reflection of the radiation heat from the melting valve 22.

### [EIGHTH EMBODIMENT]

FIG. 10 is a partial cross-sectional view in elevation illustrating the lower portion of the reactor containment vessel of the nuclear power plant according to an eighth embodiment of the present invention.

The sump floor 60 spreads horizontally above the core catcher 50 and below the reactor pressure vessel 11. The sump floor 60 is made of a steel plate. The sump floor 60 is supported by the sump floor supporting structure which is attached to the pedestal 16 along the pedestal 16. Further, a plurality of beams 70 supporting the sump floor 60 from thereunder are arranged so as to horizontally traverse the lower dry well 19. A heat reflecting material 71 reflecting the radiation heat is applied to the lower surface of each of the beams 70 and the lower surface of the sump floor supporting structure 61.

According to the present embodiment, the radiation heat from the molten core 31 retained in the core catcher 50 is reflected by the heat reflecting material 71. As a result, the amount of the radiation heat that reaches the beams 70 supporting the sump floor 60 and the sump floor supporting structure 61 can be reduced to suppress temperature rise of the beams 70 and the sump floor supporting structure 61. Thus, the sump floor 60 is prevented from falling due to melting or heat stress of the beams 70 and the sump floor supporting structure 60. Further, the radiation heat reflected by the heat reflecting material 71 reaches the melting valve 22, accelerating melting of the melting valve 22.

### [NINTH EMBODIMENT]

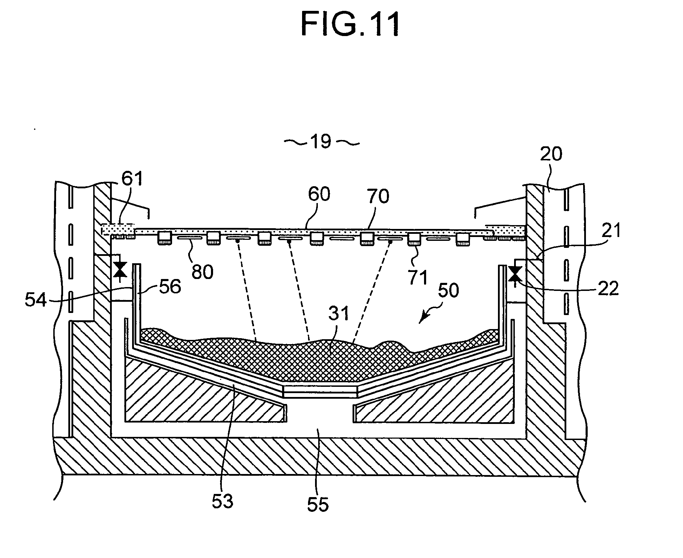

FIG. 11 is a partial cross-sectional view in elevation illustrating the lower portion of the nuclear containment vessel of the nuclear power plant according to a ninth embodiment of the present invention.

The present embodiment is a modification of the eighth embodiment and differs from the eighth embodiment in that a heat absorbing agent 80 is applied to the parts of the lower surfaces of the sump floor 60 that are not covered by the beam 70. Other configurations are the same those of the eighth embodiment.

According to the present embodiment, radiation heat from the molten core 31 retained in the core catcher 50 is reflected by the heat reflecting material 71 and is absorbed by the heat absorbing agent 80. As a result, the sump floor 60, which is made of a thin steel plate, is intensively heated by the radiation heat and, therefore, only the floor surface of the sump floor 60 can be melted. This eliminates the obstacle for steam generated when water is injected into the molten core 31 to go up, whereby the steam can move to the upper portion of the reactor containment vessel without remaining at the lower portion of the lower dry well 19.

### [OTHER EMBODIMENTS]

Although the embodiments of the present invention have been described above, the embodiments are merely illustrative and do not limit the scope of the present invention. These novel embodiments can be practiced in other various forms, and various omissions, substitutions and changes may be made without departing from the scope of the invention. The embodiments and modifications thereof are included in the scope or spirit of the present invention and in the appended claims and their equivalents.

For example, the features of the individual embodiments may be combined.

## Claims

1. A nuclear power plant comprising:
a reactor vessel (11) containing a core (10);
a reactor containment vessel (12) containing the reactor vessel (11); and
a radiation heat reflecting member (30, 47, 62, 63, 65, 66) disposed at a portion below the reactor vessel (11) inside the reactor containment vessel (12).

2. The nuclear power plant according to claim 1, wherein
the radiation heat reflecting member (30) is configured to block radiation heat, the radiation heat being emitted toward a side wall surface (23) of the reactor containment vessel (12) from the core (31) that has been put in a molten state by an accident and flowed downward from the reactor vessel (11) to be accumulated at a lower portion (19) of the reactor containment vessel (12).

3. The nuclear power plant according to claim 1 or 2, wherein
the radiation heat reflecting member (47) is configured to block at least a part of radiation heat, the radiation heat being emitted toward a supporting structure (42, 61) supporting, at a portion (19) below the reactor vessel (11), devices (44) disposed inside the reactor containment vessel (12) from the core (31) that has been put in a molten state by an accident and flowed downward from the reactor vessel (11) to be accumulated at a lower portion (19) of the reactor containment vessel (12).

4. The nuclear power plant according to claim 1 or 2, wherein
a core catcher (50) receiving the core (31) that has been put in a molten state by an accident and flowed downward from the reactor vessel (11) and allowing the molten core (31) to be accumulated thereon is disposed inside the reactor containment vessel (12) at the portion (19) below the reactor vessel (11), and
the radiation heat reflecting member (57) is mounted to a side wall (54) of the core catcher (50).

5. The nuclear power plant according to claim 1, further comprising:
a cooling water pool (14) disposed inside the reactor containment vessel (12) at a portion outside the reactor vessel (11) in a horizontal direction; and
a melting valve (22) disposed below the reactor vessel (11) and configured to be closed at normal operation time and opened upon occurrence of a reactor accident by being melted to guide cooling water in the cooling water pool (14) into the portion (19) below the reactor vessel (11) inside the reactor containment vessel (12), wherein
the radiation heat reflecting member (62, 63, 65, 66) is disposed so as to concentrate, to the melting valve (22), radiation heat emitted from the core (31) that has been put in a molten state by an accident and flowed downward from the reactor vessel (11) to be accumulated at a lower portion (19) of the reactor containment vessel (12).

6. The nuclear power plant according to claim 5, wherein
a heat absorbing agent (67) has been applied on outer surface of the melting valve (22).

7. The nuclear power plant according to claim 3, wherein
the supporting structure includes:
a sump floor (60) spreading horizontally below the reactor vessel (11); and
a sump floor supporting , structure (61) for supporting the sump floor (60), the sump floor supporting structure (61) being disposed inside the reactor containment vessel (12) at a portion below the sump floor (60) so as to cover only part of a lower surface of the sump floor (60), and
the radiation heat reflecting member (71) is disposed so as to cover a lower surface of the sump floor supporting structure (61) and not to cover part of the lower surface of the sump floor (60) that is not covered by the sump floor supporting structure (61).

8. The nuclear power plant according to claim 3 or 7, wherein
the radiation heat reflecting member (71) is applied on the sump floor supporting structure (61).

9. The nuclear power plant according to claim 7 or 8, wherein
a heat absorbing agent (80) is applied at least on the part of the lower surface of the sump floor (60) that is not covered by the sump floor supporting structure (61).
